# EUROPÄISCHE PATENTANMELDUNG

(11) **EP 2 732 943 A1**
(43) Veröffentlichungstag der Anmeldung: **21.05.2014**
(21) Anmeldenummer: 13193537.1
(22) Anmeldetag: 19.11.2013
(51) Int. Cl.: B27D 1/00, B32B 21/14, B32B 15/20, E04B 1/94

(54) **Holzfurnier und damit furnierte Baustoffplatte**

(30) Priorität: 20.11.2012 DE 202012104480 U
(71) Anmelder: Holzbau Schmid GmbH & Co. KG, 73099 Adelberg (DE)
(72) Erfinder: Schmid, Claus, 73099 Adelberg (DE)
(74) Vertreter: Ring & Weisbrodt

(57) **Zusammenfassung**

Die vorliegende Erfindung betrifft ein Holzfurnier (11), insbesondere zur Beschichtung einer nicht brennbaren Baustoffplatte für Brandschutzzwecke, aus einem großflächigen flexiblen Furnierblatt (11) und einer einseitig aufgebrachten Furnierverstärkung aus einem Vliesmaterial (12, 13), welches dadurch gekennzeichnet ist, dass das Furnierblatt (11) auf seiner Rückseite mit einem Mineralfaservlies (12, 13), vorzugsweise Glasfaservlies (12, 13), kaschiert ist. Desweiteren betrifft die vorliegende Erfindung eine hiermit furnierte Baustoffplatte (1).

## Beschreibung

Die Erfindung betrifft ein Holzfurnier aus einem großflächigen flexiblen Furnierblatt und einer einseitig aufgebrachten Furnierverstärkung aus einem Vliesmaterial sowie eine mit einem solchen Holzfurnier beschichtete Baustoffplatte für Brandschutzzwecke.

Definitionsgemäß ist ein Furnier ein dünnes Blatt aus Holz, das durch Schälen, Messern oder Sägen von einem Stamm abgetrennt wird (DIN 4079). Die Nenndicken für Furniere liegen in der Regel zwischen 0,5 mm und 0,6 mm. In Abhängigkeit von dem Verwendungszweck können auch andere Furnierdicken, insbesondere dünnere Furniere hergestellt werden. Die anschließende Furnierverarbeitung umfasst im Wesentlichen das Fügen der Furnierblätter zu Flächen, das Aufbringen dieser Furnierflächen auf Trägermaterialien sowie deren Oberflächenbehandlung. Um die Weiterverarbeitung zu erleichtern, wird häufig eine rückseitige Beschichtung des Furniers mit Vliesen oder Papieren, das sogenannte Kaschieren, vorgenommen. Dieser Materialverbund ist einfacher zu verarbeiten und stabiler als das Rohfurnier, wobei auch zweidimensionale Verformungen, wie das Biegen, sich leichter und rissfreier realisieren lassen. Die zur Kaschierung verwendeten Vliesstoffe sind Flächengebilde aus Fasern, die textiler oder synthetischer Natur, beispielsweise Polymerfasern, sein können. Bevorzugt werden bislang als Furnierverstärkung Vliese aus langfaseriger Zellulose mit beigemischten synthetischen Fasern und Latexbindern, die mittels einer einseitigen Klebstoffvorbeschichtung im Heißpressverfahren ohne Zugabe von weiterem Klebstoff mit dem Furnier verpresst werden. Nachteilig ist dabei, dass derartige mit einem Furnierverstärkungsvlies versehene Holzfurniere für Brandschutzzwecke ungeeignet sind, so dass sich ihre Verwendung überall dort im Bauwesen verbietet, wo Brandschutzeigenschaften der Konstruktionen gefordert sind, insbesondere lassen sich mit derartigen Holzfurnieren Baustoffplatten, die für Brandschutzzwecke vorgesehen sind, nicht beschichten.

Nicht brennbare Baustoffplatten für den Brandschutz sind aus dem Stand der Technik bekannt. Sie werden insbesondere im Innenausbau von Gebäuden eingesetzt, können aber auch zum Beispiel zur Herstellung von Büro- oder Küchenschränken verwendet werden. Diese nicht brennbaren Baustoffplatten können aus unterschiedlichen Rohstoffen und auf verschiedene Weisen hergestellt werden, wobei häufig silikatische Materialien zum Einsatz kommen. Dabei sind neben feinteiligen Substanzen gröber partikuläre silikatische Bestandteile, wie beispielsweise Perlite, in den Baustoffplatten enthalten, die zwar das spezifische Gewicht außerordentlich reduzieren, die Bearbeitbarkeit aber erschweren. Insbesondere das Schleifen der Planflächen führt oft zu unregelmäßigen Oberflächen, die wiederum das Aufbringen einer Furnierschicht erschweren.

Um dieses Problem zu beheben ist mit DE 20 2011 002 155 U1 vorgeschlagen worden, eine Baustoffplatte mit einer zwei gegenüberliegende Hauptflächen aufweisenden mineralischen, nicht brennbaren Grundplatte auf zumindest einer der Hauptflächen mit einer Metallschicht, vorzugsweise einer Aluminiumschicht zu versehen. Auf diese kann dann eine Deckschicht aufgebracht werden, da die Metallschicht quasi eine Ausgleichsschicht darstellt und eine hochgradig ebene Oberfläche zur Befestigung einer Deckschicht darstellt. Wird dabei als Deckschicht ein Holzfurnier der oben beschriebenen Art mit Furnierverstärkungsvlies vorgesehen, wird aber nachteiligerweise die Brandlast erheblich erhöht und werden die Brandschutzeigenschaften der Baustoffplatte derart verschlechtert, dass eine Zulassung gemäß A2 Baustoffklassifizierung nicht mehr zu erreichen ist. Das Aufbringen von bekannten vliesverstärkten Furnieren auf eine Baustoffplatte der beschriebenen Art führt trotz dessen Nichtbrennbarkeit zum Verlust der erforderlichen Brandschutzleistung.

Der Erfindung liegt daher die Aufgabe zugrunde, ein Holzfurnier, insbesondere zur Beschichtung einer nicht brennbaren Baustoffplatte für Brandschutzzwecke und eine derartige Baustoffplatte mit wesentlich verbesserten Brandschutzeigenschaften zu schaffen.

Die Aufgabe ist an einem Holzfurnier der eingangs genannten Art erfindungsgemäß dadurch gelöst, dass das Furnierblatt auf seiner Rückseite mit einem Mineralfaservlies, vorzugsweise Glasfaservlies, kaschiert ist. Durch das Kaschieren mit Mineralfaservlies, vorzugsweise Glasfaservlies, wird ein Materialverbund mit dem Furnierblatt geschaffen, welcher im Rahmen einer Prüfung auf das Brandverhalten sämtlichen Zulassungsanforderungen genügt. Dies beruht darauf, dass durch die nicht brennbare Kaschierung die Brandlast des Laminats entscheidend verringert wird. Dabei kann das Furnierblatt sogar aus Echtholz bestehen und eine außerordentlich geringe Stärke von < 0,5 mm aufweisen.

Vorzugsweise besteht das Glasfaservlies aus Quarzglasfasern, welche im Vlies stochastisch ohne Vorzugsrichtungsanordnung orientiert sind. Mit einem solchen Wirrlagen-Vlies aus Quarzglasfasern ohne Vorzugsrichtung in ihrer Ausrichtung wird die Wärmeübertragung und damit das Verhalten im Brandfall weiter verbessert. Dies gilt auch, wenn in bevorzugter Weise das Furnierblatt mit dem Glasfaservlies unter Verwendung eines nicht brennbaren Klebstoffs verpresst ist.

Schließlich ist es vorteilhaft, das Furnierblatt durch eine vorderseitig aufgebrachte Oberflächenbeschichtung aus einem Flammschutzmittel, insbesondere einem Schaumschichtbildner auf Kunstharzbasis, weiter im Widerstand gegen die Einwirkung höherer Temperaturen auf der Holzoberfläche zu schützen. Im Brandfall bildet sich dann auf der Holzoberfläche zunächst eine schaumig-blasige Schutzschicht, die als Wärmeisolator wirkt, so dass das Eindringen von Sauerstoff zum Holz gehemmt wird und dadurch eine Entflammung verhindert wird.

Eine Baustoffplatte gemäß der Erfindung besteht aus einer zwei gegenüberliegende Hauptflächen aufweisenden, mineralischen, nicht brennbaren Grundplatte, deren wenigstens eine Hauptfläche mit einer Metallschicht, insbesondere aus einem Aluminiumwerkstoff, versehen ist. Sie ist erfindungsgemäß dadurch gekennzeichnet, dass die freie Oberfläche der Metallschicht mit einem Holzfurnier versehen ist, dessen Furnierblatt auf seiner Rückseite mit einem Mineralfaservlies, insbesondere Glasfaservlies, kaschiert ist. Dabei wird das kaschierte Furnierblatt vorzugsweise mittels eines nicht brennbaren rückseitig aufgebrachten Klebers, welcher durch insbesondere Einwirkung von Hitze aktivierbar ist, mit der Metallschicht durch Heißpressen verbunden. Hierdurch wird die bisher beim direkten Auftragen eines handelsüblichen Furnierblatts nach dem Rollauftragsverfahren entstehende Staub- und folglich Partikelabbildung durch das Furnier hindurch vermieden und darüber hinaus das Problem des bei Verwendung von Leim bestehenden Klebstoffdurchschlags durch das Mineralfaserpressvlies umgangen. Dieses kann in einfacher Weise direkt auf das Furnierblatt aufkaschiert werden und in einem zweiten Schritt durch Heißpressen mit der Metallschicht der Baustoffplatte verbunden werden. Dabei bleiben die Brandschutzeigenschaften der Baustoffplatte trotz deren Ausrüstung mit einem Furnier in vollem Umfang erhalten.

Das Furnierblatt besteht aus Echtholz bestehen und kann eine außerordentlich geringe Stärke aufweisen. Vorzugsweise besteht die mineralische Grundplatte bzw. Trägerplatte aus einem kieselsäurehaltigem Material, insbesondere Calcium-Silikat, und verfügt über eine Dichte von 800 kg/m³ oder weniger, wobei das Furnierblatt mit einem isotropen Glasfaservlies kaschiert ist und vorzugsweise vorderseitig eine Oberflächenbeschichtung aus einem Flammschutzmittel aufweist.

Weitere Einzelheiten, Merkmale und Vorteile der Erfindung ergeben sich aus der nachfolgenden Beschreibung der in der Zeichnung dargestellten Ausführungsbeispiele. In der Zeichnung zeigt:
- Fig. 1: eine erfindungsgemäße Baustoffplatte mit einseitiger Furnierbeschichtung im Schnitt,
- Fig. 2: eine Baustoffplatte mit beidseitiger Furnierbeschichtung im Schnitt und
- Fig. 3: ein erfindungsgemäßes Holzfurnier im Schnitt (links) in einer Frontansicht der Furnierblattvorderseite (Mitte) und in einer Rückansicht zur Verdeutlichung des auf das Furnierblatt aufkaschierten Glasfaservlieses (rechts).

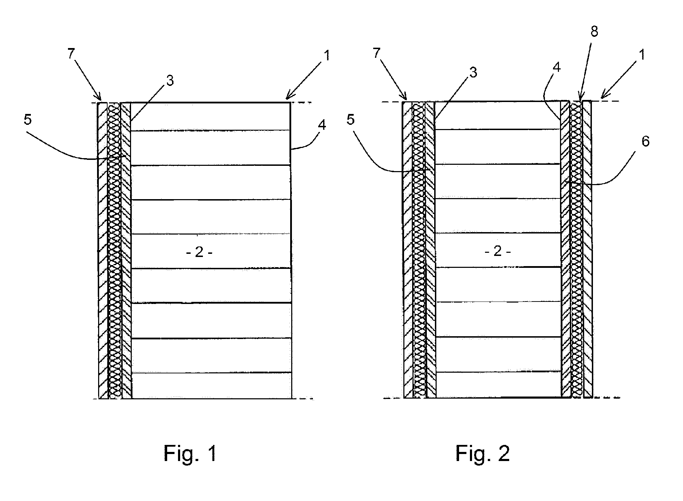

Die in Fig. 1 der Zeichnung dargestellte Baustoffplatte 1 umfasst eine Grundplatte 2 aus einem nicht brennbarem, Perlit-haltigem Silikatmaterial (SUPERLUX®-M) der Firma Promat GmbH. Die Grundplatte 2 weist eine Dichte von etwa 640 kg/m² auf.

Die Grundplatte 2 hat zwei einander gegenüberliegende Hauptflächen 3, 4, wobei auf dem dargestellten Ausführungsbeispiel ein Aluminiumblech 5 mit einer Stärke > 0,8 mm unter Verwendung eines handelsüblichen Wasserglasklebers auf die Hauptfläche 3 geklebt ist. Das Aluminiumblech 5 ist mit einer Deckschicht 7 aus einem Holzfurnier des erfindungsgemäßen, weiter unten beschriebenen Aufbaus versehen.

Die in Fig. 2 der Zeichnung dargestellte Baustoffplatte umfasst eine gleiche Grundplatte 2 mit zwei einander gegenüberliegenden Hauptflächen 3 und 4. Bei diesem Ausführungsbeispiel ist aber jeweils ein Aluminiumblech 5 und 6 mit einer Stärke von jeweils 2 mm unter Verwendung eines handelsüblichen Wasserglasklebers auf jede Hauptfläche 3, 4 aufgebracht. Jedes der Aluminiumbleche 5, 6 ist mit einer Deckschicht 7, 8 aus einem erfindungsgemäßen Holzfurnier ausgerüstet.

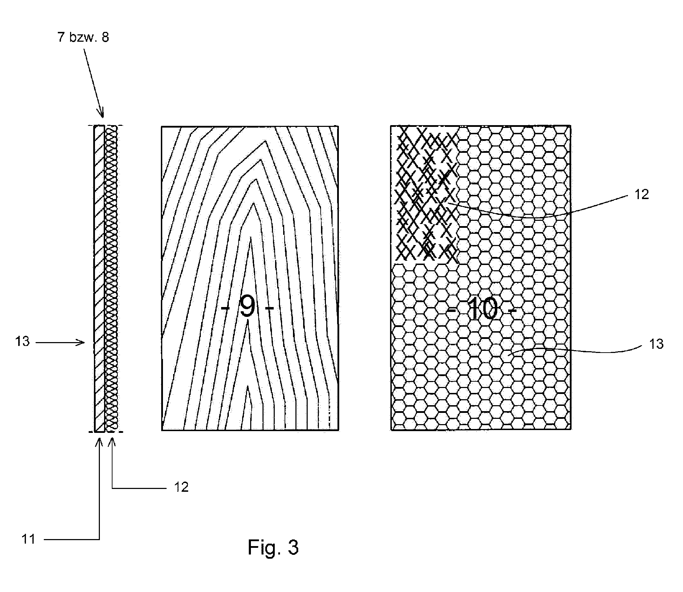

Fig. 3 der Zeichnung zeigt den Aufbau einer solchen Deckschicht 7, 8 in einer Schnittansicht, einer vorderseitigen Ansicht 9 und einer rückseitigen Ansicht 10. Dargestellt ist ein Holzfurnier zur Beschichtung der oben erläuterten nicht entflammbaren Baustoffplatte für Brandschutzzwecke. Das Holzfurnier besteht aus einem großflächigen flexiblen Furnierblatt 11 einer Stärke von 0,20 mm. Das Furnierblatt 11 ist rückseitig mit einer Furnierverstärkung aus einem Mineralfaservlies-Material, nämlich einem Glasfaservlies 12, kaschiert. Das Glasfaservlies 12 ist aus Quarzglasfasern (SIO2) als isotroper Vliesstoff mit stochastisch orientierten Fasern ohne Vorzugsrichtung (non woven) hergestellt und mit einem unter Einwirkung von Hitze aktivierten Schmelzkleber mit dem Furnierblatt verbunden. Es ist gemäß Baustoffklasse A2 nach DIN 4102 im Verbund mit der in Fig. 1 dargestellten Baustoffplatte nicht brennbar. Anstelle eines Wirrlagen-Glasfaservlieses, das in Fig. 3 durch eine Kreuzschraffierung zeichnerisch verdeutlicht ist, kann auch ein Gewebevlies 13 verwendet werden, das zeichnerisch durch eine Wabenstruktur in Fig. 3 symbolisiert ist.

Das beschriebene Holzfurnier stellt einen eigenständig vielfach anwendbaren Gegenstand dar, der je nach Anwendungsfall unterschiedlich ausgebildet sein kann, beispielsweise durch Auswahl des Furnierblatts oder durch Ausrüstung aus einer Mehrzahl von Schichten zu einem Mehrschichtlaminat. In der Ausführungsform der Fig. 1 in Verbindung mit einer nicht brennbaren Baustoffplatte kann die Verbindung des Glasfaservlieses 12 einerseits mit dem Aluminiumblech 5 bzw. 6 und andererseits mit dem Furnierblatt 11 in einem einzigen Verfahrensgang gleichzeitig vorgenommen werden, indem das Glasfaservlies 12 mit beidseitig aufgebrachtem Schmelzkleber auf die Baustoffplatte 2 aufgelegt wird, hierauf das Furnierblatt 11 positioniert wird und der Gesamtverbund durch einen einzigen Heißpressvorgang erzeugt wird. Die derart hergestellte Baustoffplatte ist aufgrund des verwendeten Schmelzklebers sowie des nicht brennbaren Glasfaservlieses in ihrem Brandverhalten durch vorgenommene ein- oder beidseitige Kaschierung nicht beeinträchtigt.

### Bezugszeichenliste

- 1: Baustoffplatte
- 2: Grundplatte
- 3: Hauptfläche
- 4: Hauptfläche
- 5: Metallschicht (Aluminiumblech)
- 6: Metallschicht (Aluminiumblech)
- 7: Deckschicht
- 8: Deckschicht
- 9: vorderseitige Ansicht
- 10: rückseitige Ansicht
- 11: Furnierblatt
- 12: Glasfaservlies
- 13: Gewebevlies

## Patentansprüche

1. Holzfurnier, insbesondere zur Beschichtung einer nicht brennbaren Baustoffplatte für Brandschutzzwecke, aus einem großflächigen flexiblen Furnierblatt (11) und einer einseitig aufgebrachten Furnierverstärkung aus einem Vliesmaterial, **dadurch gekennzeichnet, dass** das Furnierblatt (11) auf seiner Rückseite mit einem Mineralfaservlies, vorzugsweise Glasfaservlies (12), kaschiert ist

2. Holzfurnier nach Anspruch 1, **dadurch gekennzeichnet, dass** das Furnierblatt (11) aus Echtholz besteht und eine Stärke < 2,5 mm aufweist.

3. Holzfurnier nach Anspruch 1 oder 2, **dadurch gekennzeichnet, dass** das Glasfaservlies (12) aus Quarzglasfasern besteht, welche im Vlies stochastisch ohne Vorzugsrichtungsanordnung orientiert sind.

4. Holzfurnier nach einem der Ansprüche 1 bis 3, **dadurch gekennzeichnet, dass** das Furnierblatt (11) mit dem Glasfaservlies unter Verwendung eines nicht brennbaren Klebstoffs verpresst ist.

5. Holzfurnier nach einem der Ansprüche 1 bis 4, **gekennzeichnet durch** eine vorderseitig aufgebrachte Oberflächenbeschichtung aus einem Flammschutzmittel.

6. Baustoffplatte (1) aus einer zwei gegenüberliegende Hauptflächen (3, 4) aufweisenden, mineralischen, nicht brennbaren Grundplatte (2), deren wenigstens eine Hauptfläche (3, 4) mit einer Metallschicht (5, 6), insbesondere aus einem Aluminiumwerkstoff, versehen ist, **dadurch gekennzeichnet, dass** die freie Oberfläche der Metallschicht (5, 6) mit einem Holzfurnier versehen ist, dessen Furnierblatt (11) auf seiner Rückseite mit einem Mineralfaservlies (12), insbesondere Glasfaservlies, kaschiert ist.

7. Baustoffplatte (1) nach Anspruch 6, **dadurch gekennzeichnet, dass** das kaschierte Furnierblatt (11) mittels eines nicht brennbaren, rückseitig aufgebrachten Schmelzklebers, welcher durch Einwirkung von Hitze aktivierbar ist, mit der Metallschicht (5, 6) durch Heißpressen verbunden ist.

8. Baustoffplatte (1) nach Anspruch 6 oder Anspruch 7, **dadurch gekennzeichnet, dass** das Mineralfaservlies (12) aus stochastisch ohne Vorzugsrichtungsanordnung orientierten Quarzglasfasern oder in Form eines Glasfasergewebes (13) unter Verwendung eines nicht brennbaren Klebstoffs mit dem Furnierblatt (11) verpresst ist.

9. Baustoffplatte (1) nach einem der Ansprüche 6 bis 8, **dadurch gekennzeichnet, dass** das Furnierblatt (11) aus Echtholz besteht.

10. Baustoffplatte (1) nach einem der Ansprüche 6 bis 8, **dadurch gekennzeichnet, dass** die Grundplatte (2) aus einem kieselsäurehaltigem Material, insbesondere Calcium-Silikat mit einer Dichte von < 800kg/m³ besteht, wobei das Furnierblatt (11) mit einem isotropen Glasfaservlies (12) kaschiert ist und vorderseitig eine Oberflächenbeschichtung aus einem Flammschutzmittel aufweist.
